# EUROPÄISCHE PATENTSCHRIFT

(11) **EP 1 544 072 B1**
(45) Veröffentlichungstag und Bekanntmachung des Hinweises auf die Patenterteilung: **05.03.2008**
(21) Anmeldenummer: 04029504.0
(22) Anmeldetag: 14.12.2004
(51) Int. Cl.: B60T 8/34, B60T 13/68

(54) **Elektronisch geregeltes Bremssystem**
Electronically controlled braking system
Système de freinage à commande électronique

(30) Priorität: 17.12.2003 DE 10359040
(43) Veröffentlichungstag der Anmeldung: 22.06.2005
(73) Patentinhaber: KNORR-BREMSE SYSTEME FÜR NUTZFAHRZEUGE GMBH, 80809 München (DE)
(72) Erfinder: Falk, Hecker, Dr., 71706 Markgröningen (DE); Herges, Michael, 70825 Korntal-Münchingen (DE); Klement, Roland, 82407 Haunshofen (DE); Dörr, Wolfgang, 82223 Eichenau (DE)
(74) Vertreter: Schönmann, Kurt

(56) Entgegenhaltungen:
- EP-A- 0 110 119
- EP-A- 0 163 774
- EP-A- 0 405 114
- EP-A- 0 467 112
- EP-A- 0 580 382
- EP-A- 0 652 145
- EP-A- 0 845 397
- EP-A- 0 949 130
- WO-A-92/12879
- WO-A-98/26968
- DE-A- 2 706 801
- DE-A- 19 653 263
- DE-A1- 4 227 084
- US-A- 3 768 875
- DECKER H.; WREDE J.: 'ELEKTRONISCH GEREGELTE NUTZFAHRZEUGBREMSE - ELECTRONICALLY CONTROLLED BRAKES FOR COMMERCIAL VEHICLES' ATZ AUTOMOBILTECHNISCHE ZEITSCHRIFT Bd. 96, Nr. 9, 01 September 1994, VIEWEG PUBLISHING, WIESBADEN, DE, Seiten 506-508 - 510, XP000464674

## Beschreibung

### Stand der Technik

Die Erfindung betrifft ein elektronisch geregeltes Bremssystem eines Fahrzeugs gemäß dem Oberbegriff von Anspruch 1.

Elektronisch geregelte Bremssysteme (EBS), wie sie heutzutage im Nutzfahrzeugbereich verwendet werden, erhöhen und optimieren die Funktionalität gegenüber konventionellen, rein pneumatischen Bremssystemen. Bei einem EBS ist beispielsweise der bekannten pneumatischen Bremsanlage ein elektronischer Regelkreis überlagert, der die pneumatische Steuerung unterdrückt.

Ein elektronisch geregeltes Bremssystem ist aus der DE 42 27 084 A1 bekannt und beinhaltet gemäß der dort in Fig.2 gezeigten Ausführungsform ein 2-kanaliges Druckregelmodul, in welchem die übergeordnete Steuerventilanordnung und die weitere Steuerventilanordnung zusammengefasst sind. Bei elektro-pneumatischen Bremssystemen, d.h. bei Bremssystemen mit vorrangigem elektrischem Bremskreis und demgegenüber nachrangigem, nur im Störungsfall aktivierten pneumatischem Bremskreis sind stets zwei pneumatische Leitungen zur Versorgung eines solchen Druckregelmoduls notwendig, nämlich eine einen Vorratsdruck führende pneumatische Leitung und eine einen von einem pneumatischen Kanal des Betriebsbremsventil erzeugten Steuerdruck als Back-up-Druck führende pneumatische Leitung. Entsprechend sind vom Druckregelmodul zu dem jeweiligen Bremszylinder zwei pneumatische Leitungen vorhanden. Wenn ein solches Druckregelmodul in zentraler Position der Achse oder radnah angeordnet wird, müssen folglich je Rad zwei pneumatische Leitungen verlegt werden, was mit einem hohen Installationsaufwand und damit mit relativ hohen Fertigungskosten verbunden ist.

In der EP 0 580 382 A1 wird ein elektronisch geregeltes Bremssystem beschrieben, bei welchem ein elektronisches Steuergerät mehrere elektrisch betätigte EBS-Ventile ansteuert, welche die Luftversorgung von pneumatischen Bremsaktuatoren steuern.

Die EP 0 652 145 A1 beschreibt ein elektronisch geregeltes Bremssystem mit mehreren Drucksteuerventilen, denen lokale elektronische Steuergeräte zugeordnet sind, welche mit einem übergeordneten Steuergerät kommunizieren.

Bei der Bremsanlage gemäß 180 ATZ 96 (1994), No.9 September, Stuttgart, DE, "Elektronisch geregelte Nutzfahrzeugbremse" sind neben zentralen Ventilen Drucksteuerventile vorhanden, von denen pneumatische Leitungen zu den Bremszylindern führen.

Bei der gattungsbildenden EP 0 163 774 A2 verläuft zwischen der weiteren elektrisch betätigten Steuerventilanordnung und den Bremszylindern jeweils eine pneumatische Bremsdruckleitung. Dies bedingt jedoch einen gewissen Fertigungs- und Montageaufwand. Außerdem besteht das Risiko, dass die Bremsdruckleitungen lecken und damit die Funktion des sicherheitsrelevanten Bremssystems gefährdet wird. Weiterhin ist das gattungsgemäße Bremssystem aus lauter Einzelkomponenten aufgebaut, wie der übergeordneten elektrisch betätigten Steuerventilanordnung, der weiteren elektrisch betätigten Steuerventilanordnung sowie dem Steuergerät, so dass Bedarf nach einer funktions- und fertigungsorientierten Anordnung dieser Komponenten besteht.

Der vorliegenden Erfindung liegt demgegenüber die Aufgabe zugrunde, ein Bremssystem der eingangs erwähnten Art derart weiterzubilden, dass es einfacher und kostengünstiger herzustellen ist. Darüber hinaus soll es eine größere Ausfallsicherheit aufweisen.

Erfindungsgemäß wird diese Aufgabe durch die Merkmale von Anspruch 1 gelöst.

### Vorteile der Erfindung

Gemäß der Erfindung steht die weitere elektrisch betätigte Steuerventilanordnung mit einem druckmittelbeaufschlagbaren Zylinderraum des zugeordneten Radbremnszylinders unmittelbar in Verbindung und ist entfernt von der übergeordneten, mit einer Steuer- und Regelelektronik zur Steuerung und Regelung der Steuerventilanordnungen zu einem Achsmodul baulich zusammengefasst und an einer zentralen Stelle der Achse angeordneten elektrisch betätigten Steuerventilanordnung angebracht.

Demzufolge muss lediglich eine einzige pneumatische Leitung zwischen der übergeordneten elektrisch betätigten Steuerventilanordnung und der weiteren elektrisch betätigten Steuerventilanordnung installiert werden, welche entweder den Vorratsdruck oder den vom Betriebsbremsventil erzeugten Druck führt. Dies resultiert in einem geringen Installationsaufwand und niedrigeren Fertigungskosten.

Indem weiterhin die weitere, elektrisch betätigte Steuerventilanordnung unmittelbar mit einem druckmittelbeaufschlagbaren Zylinderraum des Bremszylinder in Verbindung steht, können pneumatische Verbindungsleitungen zwischen der radnahen weiteren elektrisch betätigten Steuerventilanordnung und dem zugeordneten Bremszylinder komplett entfallen, was den Installationsaufwand weiter senkt. Außerdem verbessern sich durch kürzere Strömungswege des Druckmittels die Dynamik und das Ansprechverhalten der Bremse, was vor allem bei einer schlupfgeregelten Bremsung, d.h. bei einer Anti-Blockier-System (ABS) unterstützten Bremsung von Vorteil ist. Weiterhin ergibt sich bei einer ABSunterstützten Bremsung ein geringerer Luftverbrauch, wodurch verbesserte Druckregelstrategien möglich sind. Schließlich können der Bremszylinder und die mit ihm verbaute radnahe Steuerventilanordnung als standardisierte, vorgefertigte Baueinheit multifunktional auch für Anti-Blockier-Systeme (ABS) verwendet werden. Aufgrund der relativ hohen Stückzahlen solcher Baueinheiten ergeben sich wiederum geringe Fertigungskosten.

Indem nicht zuletzt eine Steuer- und Regelelektronik zur Steuerung und Regelung der Steuerventilanordnungen mit der übergeordneten elektrisch betätigten Steuerventilanordnung zu einem Achsmodul baulich zusammengefasst ist, kann ein solches Achsmodul einer oder mehreren Achsen zugeordnet werden, wobei dann die Steuer- und Regelelektronik die Steuerventilanordnungen einer oder der mehrerer Achsen ansteuert. Im Fehlerfall kann dann ein mehrstufiges Abschaltkonzept realisiert werden, bei welchem bei Fehlern in der weiteren elektrisch betätigten Steuerventilanordnung oder in einem radnahen Drucksensor der Bremsdruck über die Steuer- und Regelelektronik in dem Achsmodul geregelt wird. Darüber hinaus kann das Achsmodul als Integrationsbasis für weitere Funktionen verwendet werden, beispielsweise für eine elektronische Luftfederung, eine Sperrenansteuerung, eine Schaltung von Nebenantrieben etc..

Vorteilhafte Weiterbildungen und Verbesserungen der Erfindung sind durch die in den Unteransprüchen aufgeführten Maßnahmen möglich.

Vorzugsweise beinhaltet die übergeordnete Steuerventilanordnung ein 3/2-Wegeventil, welches druckeingangsseitig mit einem Druckreservoir und mit dem Betriebsbremsventil und druckausgangsseitig mit der radnahen Steuerventilanordnung verbunden ist. Dieses schaltet im normalen Bremsfall den Vorratsdruck und im Falle einer Störung des elektrischen Bremskreises den vom Betriebsbremsventil erzeugten pneumatischen Steuerdruck auf die radnahe Steuerventilanordnung durch. Diese weist beispielsweise ein Einlaßventil und ein Auslaßventil je in Form eines 2/2-Wegeventils auf.

### Zeichnungen

Ein Ausführungsbeispiel der Erfindung ist in der Zeichnung dargestellt und in der nachfolgenden Beschreibung näher erläutert. Es zeigen :
- Fig.1: ein bevorzugtes Ausführungsbeispiel eines elektronisch geregelten Bremssystems eines Nutzfahrzeugs gemäß der Erfindung;
- Fig.2: ein weiteres elektronisch geregeltes Bremssystem eines Nutzfahrzeugs.

### Beschreibung des Ausführungsbeispiels

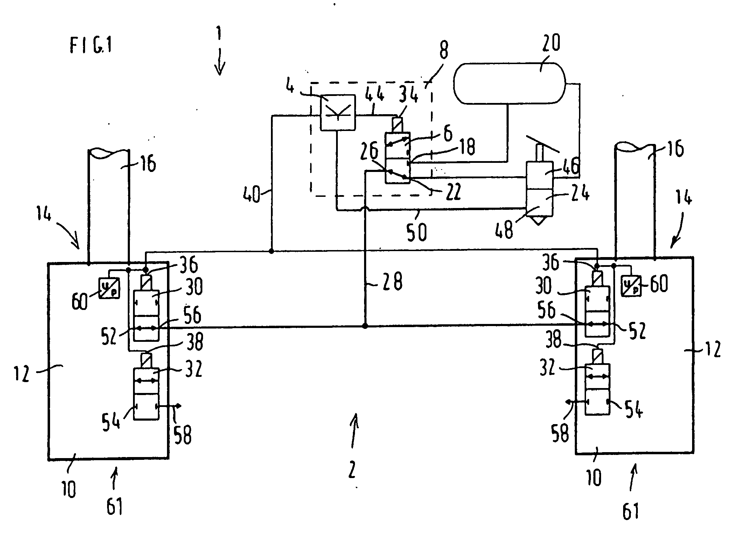

In Fig.1 ist mit der Bezugszahl 1 ein Abschnitt eines elektronisch geregelten Bremssystems eines Nutzfahrzeugs bezeichnet, welcher einer gebremsten Achse 2 zugeordnet ist. Der gezeigte Teil des Bremssystems 1 beinhaltet eine Steuer- und Regelelektronik 4 unter anderem zur Steuerung und Regelung einer übergeordneten Steuerventilanordnung 6, welche mit dieser an einer zentralen Stelle der Achse 2, d.h. im wesentlichen mittig zwischen den von der Achse 2 getragenen Rädern angeordnet und zu einem Achsmodul 8 baulich zusammengefaßt ist. Dies kann beispielsweise dadurch realisiert sein, daß die Steuer- und Regelelektronik 4 und die übergeordnete Steuerventilanordnung 6 in einem gemeinsamen Gehäuse untergebracht sind oder getrennte, aber in unmittelbarer Nachbarschaft angeordnete Gehäuse aufweisen.

Die Achse 2 trägt zwei Räder, welchen jeweils ein Radbremszylinder 10 mit einem druckmittelbeaufschlagbaren Zylinderraum 12 zugeordnet ist. Als Druckmittel kommt beispielsweise Druckluft zum Einsatz. Weiterhin ist für jeden Radbremszylinder 10 eine radnahe und elektrisch betätigte Steuerventilanordnung 14 zum Druckaufbau, Druckhalten und Druckabbau in dem jeweiligen Radbremszylinder 10 vorhanden. Aus den Radbremszylindern 10 ragen Kolbenstangen 16 zur Betätigung je einer aus Maßstabsgründen nicht gezeigten Scheibenbremse, welche durch Druckerhöhung in dem jeweiligen Radbremszylinder 10 zugespannt und durch Drucksenken gelöst wird.

Wie aus Fig.1 anschaulich hervorgeht, sind die radnahen Steuerventilanordnungen 14 jeweils in unmittelbarer Nachbarschaft zum zugeordneten Radbremszylinder 10 und entfernt vom Achsmodul 8 angebracht. Die übergeordnete Steuerventilanordnung wird vorzugsweise durch ein elektrisch betätigtes 3/2-Wegeventil 6 gebildet, welches mit seinem einen Druckeingang 18 mit einem Druckreservoir 20 und mit seinem anderen Druckeingang 22 mit einem Betriebsbremsventil 24 und mit seinem Druckausgang 26 über eine einzige pneumatische Leitung 28 mit den radnahen Steuerventilanordnungen 14 verbunden ist. Genauer schaltet das 3/2-Wegeventil 6 stromlos den Steuerdruck des Betriebsbremsventils 24 und bestromt den aus dem Druckreservoir 20 abgeleiteten Vorratsdruck an seinen Druckausgang 26 weiter. Die radnahen Steuerventilanordnungen 14 weisen jeweils ein Einlaßventil 30 und ein Auslaßventil 32, je in Form eines elektrisch betätigten 2/2-Wegeventils auf.

Ektrische Steueranschlüße 34, 36 und 38 des 3/2-Wegeventils 6, der Einlaßventile 30 und der Auslaßventile 32 steht jeweils über elektrische Steuerleitungen 40 mit der Steuer- und Regelelektronik 4 steuerbar in Verbindung, wobei diese Steuerleitungen in Fig.1 aus Übersichtlichkeitsgründen als eine einzige Steuerleitung 40 gezeichnet sind. Weil die Steuer- und Regelelektronik 4 in demselben Gehäuse wie das 3/2-Wegeventil 6 angeordnet ist, fällt die entsprechende Steuerleitung 44 kurz aus. Das Betriebsbremsventil 24 hat wenigstens einen pneumatischen Kanal 46, mit dem es den pneumatischen Steuerdruck erzeugt, sowie einen elektrischen Kanal 48 zur Erzeugung eines elektrischen Steuersignals in Abhängigkeit von der Bremsanforderung, welches mittels einer elektrischen Leitung 50 in die Steuer- und Regelelektronik 4 eingesteuert wird, die abhängig von diesem Signal die Einlaßventile 30 und die Auslaßventile 32 ansteuert.

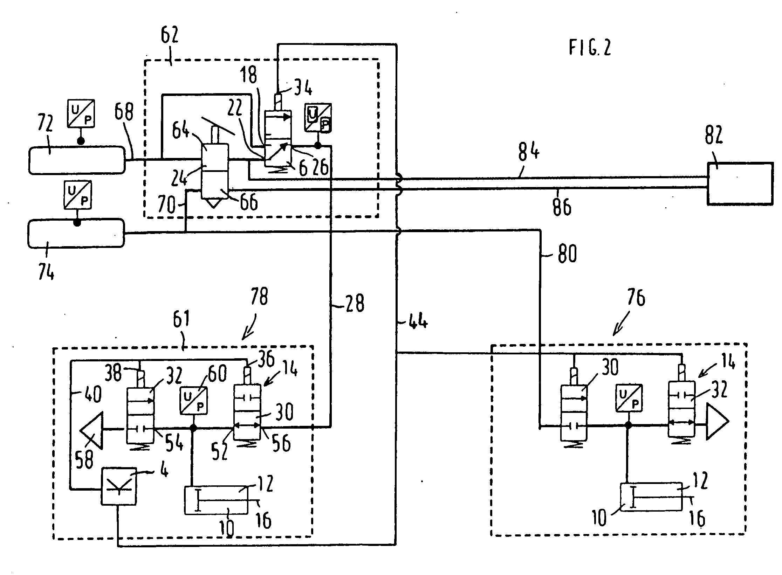

Die Einlaßventile 30 und die Auslaßventile 32 stehen jeweils unmittelbar mit dem druckmittelbeaufschlagbaren Zylinderraum 12 des zugeordneten Radbremszylinders 10 in Verbindung, wobei die radnahen Steuerventilanordnungen 14 vorzugsweise in die Radbremszylinder 10 integriert sind, beispielsweise durch Anordnung in dem Radbremszylinder 10 selbst. Alternativ könnten die Einlaßventile 30 und die Auslaßventile 32 an einer Außenfläche der zugeordneten Radbremszylinder 10 angeordnet sein. Entscheidend ist, daß ein Druckausgang 52 des Einlaßventils 30 und ein Druckeingang 54 des Auslaßventils 32 direkt in den Zylinderraum 12 des zugeordneten Radbremszylinders 10 münden, ohne daß hierfür pneumatische Leitungen notwendig sind. Darüber hinaus steht ein Druckeingang 56 des Einlaßventils 30 über die pneumatische Leitung 28 mit dem Druckausgang 26 des 3/2-Wegeventils 6 in Verbindung. Das Einlaßventil 30 schaltet stromlos den an seinem Druckeingang 56 anstehenden Druck zum Zylinderraum 12 des Radbremszylinders 10 durch und sperrt ihn bestromt ab, wohingegen das Auslaßventil 32 stromlos seinen Druckeingang 54 gegen seinen Druckausgang, eine Entlüftung 58 sperrt und bestromt durchschaltet. Schließlich messen Drucksensoren 60 den Druck in den Zylinderräumen 12 der Radbremszylinder 10 und senden ein entsprechendes Sensorsignal über den Ist-Bremsdruck an die Steuer- und Regelelektronik 4. Das Einlaßventil 30, das Auslaßventil 32, der Radbremszylinder 10 und der Drucksensor 60 bilden zusammen ein radnahes Radmodul 61, welches einem der Räder der Achse zugeordnet ist. Alternativ kann auch die Steuer- und Regelelektronik 4 in einem Radmodul 61 integriert sein, wie in Fig.2 gezeigt ist.

Vor diesem Hintergrund ist die Funktionsweise des Bremssystems 1 wie folgt : Bei einem normalen Bremsvorgang ist das 3/2-Wegeventil 6 bestromt und schaltet folglich den Vorratsdruck aus dem Druckreservoir 20 an seinen Druckausgang 26 und auf den Druckeingang 56 des Einlaßventils 30. Je nach Bremsanforderung des Fahrers, d.h. je nach Betätigungsgrad des Betriebsbremsventils 24 wird das Einlaßventil 30 durch Signale der Steuer- und Regelelektronik 4 geöffnet, um den Druck im Zylinderraum 12 des zugeordneten Radbremszylinders 10 zu erhöhen, demgegenüber sperrt das Auslaßventil 32. Zum Druckhalten wird nun auch das Einlaßventil 30 geschlossen. Zum Lösen der Bremse wird das Auslaßventil 32 geöffnet, um den Druck in den Zylinderräumen 12 der Radbremszylinder 10 zu senken. Ein Vergleich zwischen dem vom Drucksensor 60 gemessenen Ist-Druck mit einem durch die Bremsanforderung vorgegebenen Soll-Druck in der Steuer- und Regelelektronik 4 veranlaßt gegebenenfalls eine Korrektur des Drucks mittels entsprechender Schaltung des Einlaßventils 30 und des Auslaßventils 32.

Fällt der durch den elektrischen Kanal 48 des Betriebsbremsventils 24 gesteuerte elektrische Bremskreis aus, so wird das 3/2-Wegeventil 6 stromlos und schaltet den Steuerdruck des pneumatischen Kanals 46 des Betriebsbremsventils 24 auf die Druckeingänge 56 der Einlaßventile 30, welche beim Zuspannen der Scheibenbremse ebenfalls stromlos diesen Steuerdruck in die Zylinderräume 12 der Radbremszylinder 10 einsteuern. Das Auslaßventil 32 sperrt in diesem Fall stromlos seinen Druckeingang 54 gegenüber der Entlüftung 58.

Bei dem nicht von der Erfindung umfassten Ausführungsbeispiel gemäß Fig.2 sind die gegenüber dem vorhergehenden Beispiel gleichbleibenden und gleichwirkenden Teile durch die gleichen Bezugszeichen gekennzeichnet. Im Unterschied zu diesem ist das 3/2-Wegeventil 6 in unmittelbarer Nachbarschaft zu dem Betriebsbremsventil 24 angeordnet und mit diesem in einem gemeinsamen Gehäuse unter Bildung eines Fußbremsmoduls 62 baulich zusammengefaßt. Das Betriebsbremsventil 24 hat neben einem nicht gezeigten elektrischen Kanal zwei pneumatische Kanäle, einen Vorderachs-Kanal 64 und einen Anhänger-Kanal 66, welche eingangsseitig jeweils über eine pneumatische Leitung 68, 70 mit je einem Druckreservoir 72, 74 verbunden sind. Ausgangsseitig ist nur der Vorderachs-Kanal 64 an das 3/2-Wegeventil 6 angeschlossen, so daß nur die Radbremsen der Vorderachse 78 über einen pneumatischen Backup-Kreis verfügen. Wie bei Fig.1 ist zwischen dem 3/2-Wegeventil und den radnahen Steuerventilanordnungen 14 für die Vorderachse 78 nur eine einzige pneumatische Leitung 28 vorhanden. Genauso verbindet eine einzige pneumatische Leitung 80 das Druckreservoir 74 mit den radnahen Steuerventilanordnungen 14 der Hinterachse 76.

Währende einer normalen Bremsung liegt an den Radmoduln 61 der Vorderachse folglich der Vorratsdruck des Druckreservoirs 72 an, bei Ausfall des elektrischen Bremskreises an der Vorderachse 78 wird der pneumatische Steuerdruck des Betriebsbremsventils 24 an die Radmodule 61 der Vorderachse 78 durchgesteuert. Die Hinterachse 76 arbeitet demgegenüber stets mit dem Vorratsdruck des Druckreservoirs 74 und bleibt die Ausfall des elektrischen Bremskreises drucklos. Für die Ansteuerung eines Anhängersteuermoduls 82 (Trailer Control Modul TCM) dient zum einen eine vom Vorderachskanal 64 des Betriebsbremsventils 24 gezogene pneumatische Backup-Leitung 84 sowie eine vom Anhängerkanal 66 führende pneumatische Leitung 86.

Die beiden Radmoduln 61 der Vorderachse 78, von welchen in Fig.2 nur eines gezeigt ist, weisen im Unterschied zu den Radmoduln 61 von Fig.1 die Steuer- und Regelelektronik auf, so daß in den Radmoduln 61 der Vorderachse 78 eine komplette Druckregelung verwirklicht ist. Obwohl in Fig.2 eine das Einlaßventil 30 und das Auslaßventil 32 mit dem Zylinderraum 12 verbindende pneumatische Leitung zur Funktionsveranschaulichung eingezeichnet ist, mündet wie in Fig.1 ein Druckausgang 52 des Einlaßventils 30 und ein Druckeingang 54 des Auslaßventils 32 direkt in den Zylinderraum 12 des zugeordneten Radbremszylinders 10.

### Bezugszahlenliste

- 1: Bremssystem
- 2: Achse
- 4: Steuer- und Regelelektronik
- 6: übergeordnete Steuerventilanordnung
- 8: Achsmodul
- 10: Radbremszylinder
- 12: Zylinderraum
- 14: radnahe Steuerventilanordnung
- 16: Kolbenstange
- 18: Druckeingang
- 20: Druckreservoir
- 22: Druckeingang
- 24: Betriebsbremsventil
- 26: Druckeingang
- 28: Leitung
- 30: Einlaßventil
- 32: Auslaßventil
- 34: Steueranschluß
- 36: Steueranschluß
- 38: Steueranschluß
- 40: Steuerleitung
- 44: Steuerleitung
- 46: pneumat. Kanal
- 48: elektr. Kanal
- 50: Leitung
- 52: Druckausgang
- 54: Druckeingang
- 56: Druckeingang
- 58: Entlüftung
- 60: Drucksensor
- 61: Radmodul
- 62: Fußbremsmodul
- 64: Vorderachskanal
- 66: Anhängerkanal
- 68: Leitung
- 70: Leitung
- 72: Druckreservoir
- 74: Druckreservoir
- 76: Hinterachse
- 78: Voderachse
- 80: Leitung
- 82: Anhängersteuermodul
- 84: Backup-Leitung
- 86: Leitung

## Patentansprüche

1. Elektronisch geregeltes Bremssystem (1) eines Fahrzeugs, insbesondere bremsschlupfgeregeltes und/oder antriebsschlupfgeregeltes Bremssystem eines Nutzfahrzeugs, wobei für wenigstens eine der gebremsten Achsen (2) eine übergeordnete elektrisch betätigte Steuerventilanordnung (6) zum wahlweisen Aussteuern eines Vorratsdrucks eines Druckreservoirs (20) oder eines von einem Betriebsbremsventil (24) abgeleiteten Steuerdrucks an wenigstens eine weitere elektrisch betätigte Steuerventilanordnung (14) zum Druckaufbau, Druckhalten und Druckabbau in einem Radbremszylinder (10) eines Rades der Achse (2) vorgesehen ist, **dadurch gekennzeichnet, daß** die weitere elektrisch betätigte Steuerventilanordnung (14) mit einem druckmittelbeaufschlagbaren Zylinderraum (12) des zugeordneten Radbremszylinders (10)unmittelbar in Verbindung steht und entfernt von der übergeordneten, mit einer Steuer- und Regelelektronik (4) zur Steuerung und Regelung der Steuerventilanordnungen (6, 14) zu einem Achsmodul (8) baulich zusammengefassten und an einer zentralen Stelle der Achse (2) angeordneten elektrisch betätigten Steuerventilanordnung (6) angebracht ist.

2. Bremssystem nach Anspruch 1, **dadurch gekennzeichnet, dass** die weitere elektrisch betätigte Steuerventilanordnung (14) in den Radbremszylinder (10) integriert oder an einer Außenfläche des Radbremszylinders (10) angeordnet ist.

3. Bremssystem nach Anspruch 2, **dadurch gekennzeichnet, dass** wenigstens ein Druckeingang (54) und/oder wenigstens ein Druckausgang (52) der weiteren elektrisch betätigten Steuerventilanordnung (14) direkt in den Zylinderraum (12) des Radbremszylinders (10) mündet.

4. Bremssystem nach wenigstens einem der vorhergehenden Ansprüche, **dadurch gekennzeichnet, dass** die übergeordnete elektrisch betätigte Steuerventilanordnung ein 312-Wegeventil (6) beinhaltet, welches druckeingangsseitig mit einem Druckreservoir (20) und mit dem Betriebsbremsventil (24) und druckausgangsseitig mit der weiteren elektrisch betätigten Steuerventilanordnung (14) verbunden ist.

5. Bremssystem nach wenigstens einem der vorhergehenden Ansprüche, **dadurch gekennzeichnet, dass** die weitere elektrisch betätigte Steuerventilanordnung (14) ein Einlaßventil (30) und ein Auslaßventil (32) je in Form eines 2/2-Wegeventils beinhaltet.

6. Bremssystem nach wenigstens einem der vorhergehenden Ansprüche, **dadurch gekennzeichnet, dass** wenigstens ein Drucksensor (60) zur Messung des Bremsdrucks im Radbremszylinder (10) vorhanden ist.

7. Bremssystem nach wenigstens einem der vorhergehenden Ansprüche, **dadurch gekennzeichnet, dass** die übergeordnete elektrisch betätigte Steuerventilanordnung (6) bei Betriebsbremsungen Vorratsdruck zu der weiteren elektrisch betätigten Steuerventilanordnung (14) durchsteuert und diese einen Bremsdruck in den Radbremszylinder (10) elektrisch einregelt.

8. Bremssystem nach wenigstens einem der vorhergehenden Ansprüche, **dadurch gekennzeichnet, dass** die übergeordnete elektrisch betätigte Steuerventilanordnung (6) bei Betriebsbremsungen den vom Betriebsbremsventil (24) abgeleiteten Steuerdruck durchsteuert und die weitere elektrisch betätigte Steuerventilanordnung (14) eine Blockierschutzfunktion ausübt.

9. Bremssystem nach wenigstens einem der vorhergehenden Ansprüche, **dadurch gekennzeichnet, dass** die übergeordnete elektrisch betätigte Steuerventilanordnung (6) nur im Falle einer antriebsschlupfgeregelten Bremsung Vorratsdruck zur radindividuellen Modulation an die weitere elektrisch betätigte Steuerventilanordnung (14) durchsteuert.

## Claims

1. Electronically controlled brake system (1) in a vehicle, in particular a brake system controlled in terms of wheel slip and/or drive skid in a commercial vehicle, wherein an electrically operated master control valve means (6) for optionally controlling a reservoir pressure of a pressure reservoir (20) or a pilot pressure derived from a service brake valve (24) for at least one of the braked axles (2) is provided on at least one further electrically operated control valve means (14) for establishing, maintaining and reducing the pressure in a wheel brake cylinder (10) of a wheel on said axle (2), **characterised in that** said further electrically operated control valve means (14) is in direct communication with a cylinder volume (12) adapted to be subjected to a compressed medium of the associated wheel brake cylinder (10) and is mounted remotely from said electrically operated master control valve means (6) combined, in structural terms, with an electronic control and regulating unit (4) for controlling and regulating said control valve means (6, 14) so as to form an axle module (8), and disposed at a central point of said axle (2).

2. Brake system according to Claim 1, **characterised in that** said further electrically operated control valve means (14) is integrated into said wheel brake cylinder (10) or is disposed on an outside surface of said wheel brake cylinder (10).

3. Brake system according to Claim 2, **characterised in that** at least one pressure input (54) and/or at least one pressure output (52) of said further electrically operated control valve means (14) opens directly into said cylinder volume (12) of said wheel brake cylinder (10).

4. Brake system according to at least one of the preceding Claims, **characterised in that** said electrically operated master control valve means includes a 3/2-way valve (6) that is connected to a pressure reservoir (20) and said service brake valve (24) on the pressure input side and to said further electrically operated control valve means (14) on the pressure output side.

5. Brake system according to at least one of the preceding Claims, **characterised in that** said further electrically operated control valve means (14) includes an inlet valve (30) and an outlet valve (32), each in the form of a 2/2-way valve.

6. Brake system according to at least one of the preceding Claims, **characterised in that** at least one pressure sensor (60) is provided for measuring the brake pressure in said wheel brake cylinder (10).

7. Brake system according to at least one of the preceding Claims, **characterised in that** said electrically operated master control valve means (6) controls reservoir pressure through to said further electrically operated control valve means (14) and that the latter electrically regulates a brake pressure into said wheel brake cylinder (10).

8. Brake system according to at least one of the preceding Claims, **characterised in that** in the event of service brake application, said electrically operated master control valve means (6) passes the control pressure derived from said service brake valve (24) on and that said further electrically operated control valve means (14) performs an anti-lock function.

9. Brake system according to at least one of the preceding Claims, **characterised in that** said electrically operated master control valve means (6) passes reservoir pressure for individual modulation per wheel to said further electrically operated control valve means (14) only in the case of brake application with drive skid control control.

## Revendications

1. Système de freinage (1) à commande électronique dans un véhicule, en particulier un système de freinage commandé en vue de glissement de freinage et/ou glissement en entraînement dans un véhicule utilitaire, dans lequel un moyen prioritaire à vanne-pilote à commande électrique (6) à commander, à volonté, une pression de réservoir d'un réservoir de pression (20) ou une pression pilote dérivée d'un robinet de freinage de service (24) pour au moins un parmi les essieux freinés (2) est disposé à au moins un moyen supplémentaire à vanne-pilote à commande électrique (14) afin de maintenir et réduire la pression dans un cylindre de frein de roue (10) d'une roue dudit essieu (2), **caractérisé en ce que** ledit moyen supplémentaire à vanne-pilote à commande électrique (14) se trouve en communication directe avec un volume de cylindre (12) auquel on peut appliquer un milieu sous pression du cylindre de frein de roue affecté (10), en étant monté à distance dudit moyen prioritaire à vanne-pilote à commande électrique (6), qui est combiné, en construction, avec une unité électronique de commande et de réglage (4) afin de commander et régler ledit moyen à vanne-pilote (6, 14), en constituant un module d'essieu (8), et qui est disposé à un point central dudit essieu (2).

2. Système de freinage selon la revendication 1, **caractérisé en ce que** ledit moyen supplémentaire à vanne-pilote à commande électrique (14) est intégré dans ledit cylindre de frein de roue (10) ou est disposé à une surface extérieure dudit cylindre de frein de roue (10).

3. Système de freinage selon la revendication 2, **caractérisé en ce qu'**au moins une entrée de pression (54) et/ou au moins une sortie de pression (52) dudit moyen supplémentaire à vanne-pilote à commande électrique (14) débouche directement dans ledit volume de cylindre (12) dudit cylindre de frein de roue (10).

4. Système de freinage selon au moins une quelconque des revendications précédentes, **caractérisé en ce que** ledit moyen prioritaire à vanne-pilote à commande électrique comprend une soupape à 3/2 voies (6), qui est reliée à un réservoir de pression (20) et audit robinet de freinage de service (24) du côté d'entrée de pression, ainsi qu'audit moyen supplémentaire à vanne-pilote à commande électrique (14) du côté de sortie de pression.

5. Système de freinage selon au moins une quelconque des revendications précédentes, **caractérisé en ce que** ledit moyen supplémentaire à vanne-pilote à commande électrique (14) comprend une soupape d'entrée (30) et une soupape de sortie (32), chacune sous forme d'une soupape à 2/2 voies.

6. Système de freinage selon au moins une quelconque des revendications précédentes, **caractérisé en ce qu'**au moins un capteur de pression (60) est disposé à mesurer la pression de freinage dans ledit cylindre de frein de roue (10).

7. Système de freinage selon au moins une quelconque des revendications précédentes, **caractérisé en ce que** ledit moyen prioritaire à vanne-pilote à commande électrique (6) passe de pression de réservoir audit moyen supplémentaire à vanne-pilote à commande électrique (14), et **en ce que** le dernier règle, de manière électrique, une pression de freinage dans ledit cylindre de frein de roue (10).

8. Système de freinage selon au moins une quelconque des revendications précédentes, **caractérisé en ce qu'**au cas de serrage du frein de service, ledit moyen prioritaire à vanne-pilote à commande électrique (6) transfère la pression pilote dérivée dudit robinet de freinage de service (24) et **en ce que** ledit moyen supplémentaire à vanne-pilote à commande électrique (14) réalise une fonction anti-enrayage.

9. Système de freinage selon au moins une quelconque des revendications précédentes, **caractérisé en ce que** ledit moyen prioritaire à vanne-pilote à commande électrique (6) ne passe de pression de réservoir pour la modulation individuelle par roue audit moyen supplémentaire à vanne-pilote à commande électrique (14) qu'au cas de serrage de frein à glissement d'entraînement.
